# EUROPEAN PATENT SPECIFICATION

(11) **EP 1 700 883 B1**
(45) Date of publication and mention of the grant of the patent: **05.12.2007**
(21) Application number: 06250981.5
(22) Date of filing: 24.02.2006
(51) Int. Cl.: C08K 3/24

(54) **Curable composition**
Strahlenhärtbare Zusammensetzungen
Compositions vulcanisables

(30) Priority: 11.03.2005 US 660600 P
(43) Date of publication of application: 13.09.2006
(73) Proprietor: Rohm and Haas Company, Philadelphia, PA 19106-2399 (US)
(72) Inventor: Tang, Xun, Dresher Pennsylvania 19025 (US); Weinstein, Barry, Dresher Pennsylvania 19025 (US)
(74) Representative: Kent, Venetia Katherine

(56) References cited:
- EP-A- 0 990 729
- US-B1- 6 699 945

## Description

This invention relates to a curable composition, and its uses for treating substrates, and to articles prepared with the composition, including heat-resistant non-woven fabrics, wood-containing articles and powder-coated articles.

Polycarboxylic acid polymers and co-polymers and formulations containing them are useful as binders for various non-woven "fabrics" (e.g., fiberglass mat and insulation) and for wood particles and fibers. Such compositions are particularly useful as replacements for phenol formaldehyde binders in those applications in light of the trend away from formaldehyde-based binders for real or perceived health issues.

Polycarboxylic acid-based binder systems are more costly than formaldehyde-based binder systems for a variety of reasons. Polycarboxylic acid-based binder systems employ more costly raw materials, they tend to corrode fiberglass manufacturing equipment more than formaldehyde-based systems and the like. Thus, to make polycarboxylic acid-based binder systems more cost competitive with formaldehyde-based binders, any cost benefit that can be introduced into the use of polycarboxylic acid-based binder systems is welcome, no matter what the source of cost savings.

One reason for the corrosion caused by polycarboxylic acid-based systems is that the physical properties of fiberglass products made with such binders are improved with the addition of a mineral acid for reasons set forth in Taylor U.S. Patent No. 6,331,350. The mineral acid, of course, further contributes to corrosion.

To try and reduce cost, various other measures have been suggested including the addition of certain polyacid monomer(s) to the polycarboxylic acid-based binder systems as taught in Chen U.S. Patent No. 6,699,945 and U.S. Patent Publication No. 2003/0153690.

However, other things that can contribute to cost reduction of polycarboxylic acid-based systems are desired to offset the overall higher cost in use of polycarboxy polymer systems compared with formaldehyde systems.

The curable composition of this invention comprises:
(A) a polymeric composition selected from the group consisting of
   (1) a polycarboxy polymer having a number average molecular weight of between about 1000 and about 5,000 and a polyol,
   (2) a hydroxy-functional, carboxy-functional polymer having a number average molecular weight of between about 1000 and about 5,000, comprising the reaction product of
      (a) at least 5% by weight a,ß-ethylenically unsaturated hydroxy functional monomer,
      (b) at least 30% by weight ethylenically unsaturated carboxylic acid monomer, and
      (c) 0% by weight to less than 50% by weight a,β-ethylenically unsaturated non-hydroxy functional, non-carboxy functional monomer, or
   (3) an amine-functional, carboxy-functional polymer having a number average molecular weight of between about 1000 and about 5,000 comprising the reaction product of
      (a) at least 5% by weight a,ß-ethylenically unsaturated amine-functional monomer,
      (b) at least 30% by weight ethylenically unsaturated carboxylic acid monomer, and
      (c) 0% by weight to less than 50% by weight a,β-ethylenically unsaturated non-amine functional, non-carboxy functional monomer
(B) a polybasic carboxylic acid, or an anhydride or salt thereof, with a molecular weight of less than about 500, where the weight % of the polybasic carboxylic acid, or an anhydride or salt thereof is 3 to 40% (preferably 5 to 40%) of the weight of polymeric composition (A);
(C) a strong acid; and
(D) water in an amount at least 20% by weight of the total composition,
wherein the pH of the composition is no greater than 3.5, preferably no greater than 2.5.

In one embodiment, the composition further comprises a catalyst which comprises an alkali metal salt of a phosphorus-containing acid that can aid in heat-curing the polymer.

In an alternative embodiment the strong acid used in the composition comprises an inorganic acid, preferably sulfuric acid.

An unexpected advantage of such compositions with a strong acid and the polybasic acid is that they have lower cure energies as contrasted with compositions that lack either a strong acid or a polybasic acid. Lower cure energy translates into less energy usage, reducing cost.

Another unexpected advantage of such compositions with a strong acid and a polybasic acid is that they have lower viscosities as contrasted with compositions that lack either a strong acid or a polybasic acid. Lower viscosity means that the user has the option of not adding as much water to the binder composition to achieve a viscosity that allows the binder to spread more evenly on or within the non-woven material. Less water means that less energy is needed to drive off the water before thermal cure of the binder. Reduced viscosity also presents the option of reducing or eliminating the use of surfactants (as taught, for example, in U.S. Patent Application Serial No. 09/871,467), reducing cost even further.

Compositions of this invention are useful as binders for non-woven substrates such as fiberglass insulation. In the case of fiberglass insulation, it can be applied to fiberglass as taught in Strauss U.S. Patent No. 5,318,990

In this invention, the curable composition contains at least one low molecular weight polybasic carboxylic acid, anhydride or salt thereof having a molecular weight of about 500 or less, and most preferably 200 or less. "Polybasic acid" means an acid having at least two reactive acid functional groups as defined in Hawley's Condensed Chemical Dictionary, 14th Ed., 2002, John Wiley and Sons, Inc. Examples of suitable low molecular weight polybasic carboxylic acids and anhydrides thereof include, for example, maleic acid, maleic anhydride, fumaric acid, succinic acid, succinic anhydride, sebacic acid, azelaic acid, adipic acid, citric acid, glutaric acid, tartaric acid, itaconic acid, trimellitic acid, hemimellitic acid, trimesic acid, tricarballytic acid, 1,2,3,4-butanetetracarboxylic acid, pyromellitic acid, oligomers of carboxylic acid, and the like, and salts thereof. Optionally, the low molecular weight polybasic carboxylic acid, anhydride or salts thereof may be mixed with a hydroxyl-containing compound, under reactive conditions, prior to mixing with the polyacid copolymer.

In this invention, the curable composition contains at least one strong acid. By strong acid, we mean an acid that completely or almost completely dissociates when added to water to produce an H+ ion and the conjugate base. Examples of strong acids include mineral acids such as hydrochloric, hydrobromic, hydroiodic, nitric, perchloric and sulfuric; and certain organic acids such as sulfonic acids represented by the formula: R--SO₃H wherein R is a substituted or unsubstituted hydrocarbyl of 1 to 22 carbon atoms, a substituted or unsubstituted aryl of 6 to 22 carbon atoms. Mixtures of these acids can also be used to obtain desired cure rates and properties. An example of a strong organic acid is p-toluenesulfonic acid. Similarly, polymeric sulfonic acids, for example poly(acrylamido-2-methylpropanesulfonic acid), poly(vinylsulfonic acid), poly(p-styrenesulfonic acid), poly(sulfopropyl methacrylate), poly(methallyl sulfonic acid), poly(sulfonated styrene), 3-allyloxy-2-hydroxy-1-propane sulfonic acid, and poly(allyloxybenzenesulfonic acid), and copolymers derived therefrom with the comonomers described above, are suitable. By definition, a strong acid has a Kₐ > 1.

In certain embodiments the curable composition can include a phosphorous-containing species which can be a Phosphorous-containing compound such as, for example, an alkali metal hypophosphite salt, an alkali metal phosphite, an alkali metal polyphosphate, an alkali metal dihydrogen phosphate, a polyphosphoric acid, and an alkyl phosphinic acid or it can be an oligomer or polymer bearing Phosphorous-containing groups such as, for example, an addition polymer of acrylic and/or maleic acid formed in the presence of sodium hypophosphite, addition polymers such as, for example, the polymer of the present invention prepared from ethylenically unsaturated monomers in the presence of phosphorous salt chain transfer agents or terminators, and addition polymers containing acid-functional monomer residues such as, for example, copolymerized phosphoethyl methacrylate, and like phosphonic acid esters, and copolymerized vinyl sulfonic acid monomers, and their salts. The phosphorous-containing species can be used at a level of from 0% to 40%, preferably from 0% to 5%, further preferably from 0% to 2.5%, more preferably from 0% to 1%, and further more preferably from 0% to 0.5% by weight based on the weight of the polymer of the present invention.

Our invention also relates to substrates coated with the composition described above. When we refer to "substrate," we are not limiting ourselves to non-woven substrates, or to fiberglass in particular, although this composition is particularly useful as a binder for fiberglass insulation. We are using the word "substrate" in the sense of a substratum, an underlying support of any material different than the composition claimed in this patent application.

We measure number average molecular weight by aqueous GPC (Gel Permeation Chromatography) using the Agilent AQGPC HPLC, calibrated with a 16-point series of polyacrylic acid calibration standards ranging from 900 to 1 million (specifically 144, 216, 900, 1510, 1770, 2925, 4100, 7500, 16000, 28000, 47500, 62900, 115000, 585400, 782200, 1100000) peak molecular weight. (The term "peak" is used since each standard is monodispersed where the number-average and weight-average molecular weight are approximately the same.) Eluent is 20mM phosphate buffer pH 7.0. Detection is refractive index. Columns are Tosoh Bioscience TSKgel G21500PWx1 and GMPWx1 in tandem, and the calibration curve is LogMW vs. elution volume. We believe that this technique will provide results comparable to similar techniques reported elsewhere.

By "polycarboxy polymer", we refer to polycarboxylic acid homo and co-polymers of the types described below

### Polycarboxylic acid homopolymers

Polycarboxylic acid homopolymers useful in the practice of this invention can be made in a variety of ways. Among the ways they can be made is taught in U.S. Patent No. 6,136,916. Alternative methods are taught in U.S. Patents Nos. 6,071,994, 6,099,773 and 6,348,530. Because such general techniques are so well known, we need not provide a general schema to enable one skilled in this art to practice this invention. However, the polyacrylic acid polymer we used in our experiments reported *infra* is made according to the procedure in Example 1 below.

### Example 1

### Preparation of a Polyacrylic Acid ("pAA") Homopolymer

To a 5-liter 4-necked flask equipped with a mechanical stirrer, a condenser, a thermocouple and inlets for the gradual additions of monomer, chain regulator, and initiator solutions, is added 46.2 grams of sodium hypophosphite monohydrate and 1079.7 grams of deionized water. The contents of the flask are heated to 92°C. A monomer charge of 1710.0 grams of glacial acrylic acid is prepared. A chain regulator solution of 107.7 grams of sodium hypophosphite monohydrate dissolved in 131.7 grams of deionized water is prepared. An initiator solution of 17.1 grams of sodium persulfate dissolved in 43.2 grams of deionized water is prepared. The additions of separate feeds of the monomer charge, the chain regulator solution, and the initiator solution into the heated stirring flask are begun simultaneously and are continued separately for 120 minutes, 105 minutes, and 120 minutes respectively, while maintaining the contents of the flask at 92 °C. After the feeds are completed, the contents of the flask are maintained at 92° C for 30 minutes after which 585.0 grams of deionized water is added and the batch is cooled to room temperature. Mn = 2700.

When composition of this invention employs a polycarboxylic acid homopolymer, it also contains a polyol containing at least two hydroxyl groups. The polyol must be sufficiently nonvolatile that it will substantially remain available for reaction with the polyacid in the composition during heating and curing operations. The polyol may be a compound with a molecular weight less than about 1000 bearing at least two hydroxyl groups such as, for example, ethylene glycol, glycerol, pentaerythritol, trimethylol propane, sorbitol, sucrose, glucose, resorcinol, catechol, pyrogallol, glycollated ureas, 1,4-cyclohexane diol, diethanolamine, triethanolamine, and certain reactive polyols such as, for example, .beta.-hydroxyalkylamides such as, for example, bis-[N,N-di(.beta.-hydroxyethyl)]ad

### Polycarboxylic acid copolymers

Polycarboxylic acid copolymers useful in the practice of this invention can be made in a variety of ways. Among the ways they can be made is taught in U.S. Provisional Patent Application Nos. 60636155 and 60553652. There are other, more general ways of making polycarboxylic acid copolymers such as taught in U.S. Patent No. 6,136,916. Because such general techniques are so well known, we need not provide a general schema to enable one skilled in this art to practice this invention. However, particularly useful copolymers in this invention are made in accordance with the following Examples 2-4.

### Example 2

### Preparation of Poly(92 Acrylic acid /8 Styrene) by Solution Polymerization

Poly(acrylic acid/styrene) copolymer is prepared by a semi-continuous solution polymerization process in a 1-liter round bottom flask that has four necks, and is equipped with a ipamide, as may be prepared according to the teachings of U.S. Pat. No. 4,076,917, hereby incorporated herein by reference, or it may be an addition polymer containing at least two hydroxyl groups such as, for example, polyvinyl alcohol, partially hydrolyzed polyvinyl acetate, and homopolymers or copolymers of hydroxyethyl (meth)acrylate, hydroxypropyl (meth)acrylate, and the like.
mechanical stirrer, condenser, temperature control device, initiator feed lines and a nitrogen inlet. The specific amounts of kettle ingredients are in Table 1. The first kettle feed mixture, containing deionized water and isopropanol is fed to the kettle, and heated to 83°C, while stirring under a nitrogen purge. Upon reaching 83°C, the second kettle feed mixture, containing phenyl phosphonic acid and styrene, is introduced into the reaction flask with stirring. The acrylic acid and styrene monomer mixture, and the initiator mixture, containing sodium persulfate and deionized water, are co-fed separately over a 120-minute period. A chain transfer agent solution is run over 30 minutes. The reaction is allowed to run at 82°C. Upon completion of the feeds, the reaction mixture is maintained at the reaction temperature for a period of 30 minutes. The reaction is then heated to 100°C, until all of the isopropanol has been distilled off. During this time, deionized water is added. The resulting copolymer is characterized for solids and molecular weight, by aqueous size exclusion chromatography. The Mn of the resultant polymer is 2100.

### Examples 3 and 4

### Preparation of Poly(90 Acrylic acid /10 Butyl acrylate) by Gradual Addition Solution Polymerization

Poly(acrylic acid / butyl acrylate) copolymers are prepared by a semi-continuous solution polymerization process in a 5-liter round bottom flask that has four necks, and is equipped with a mechanical stirrer, condenser, temperature control device, initiator feed lines and a nitrogen inlet. The specific amounts of kettle ingredients are in Table 1. The first kettle feed of deionized water is heated to 73°C, while stirring under a nitrogen purge. Upon reaching 73°C, the second kettle feed mixture, containing FeSO₄, sodium metabisulfite, and deionized water is introduced into the reaction flask, with stirring. The acrylic acid, butyl acrylate and deionized water monomer mixture is co-fed over a 120 minute period; the initiator mixture, containing sodium persulfate and deionized water, is co-fed over a 122 minute period; and the sodium metabisulfite mixture, containing sodium metabisulfite and deionized water, is co-fed over a 115 minute period. The reaction is allowed to run at 73°C. Upon completion of the feeds, the reaction mixture is maintained at the reaction temperature for a period of 20 minutes. After the 20 minute hold, the reaction is cooled to 65°C, and then deionized water is added. The resulting copolymer is characterized for solids and molecular weight, by aqueous size exclusion chromatography.

**Table 1**

| **Copolymer Polymerization Ingredients & Polymer Characterization** | | | | |
|---|---|---|---|---|
| **(Quantities are in grams)** | | | | |
| | Ingredients | Ex. 2 (92 Acrylic acid / 8 styrene) | Eg. 3 (90 Acrylic acid/10Butyl acrylate) | Eg. 4 (90 Acrylic acid/10Butyl acrylate) |
| Kettle Feed 1 | Deionized water | 30 | 1514.2 | 713.8 |
| | isopropanol | 200 | | |
| Kettle Feed 2 | Phenyl phosphonic acid | 3.6 | | |
| | Styrene | 1.5 | | |
| | 0.15% FeSO₄ | | 20.3 | 11.4 |
| | Sodium metabisulfite | | 5.4 | 2.7 |
| | Deionized water | | 30.1 | 9.5 |
| Monomer Mixture | Acrylic acid | 186.5 | 1985.7 | 1027.3 |
| | styrene | 15 | | |
| | Butyl acrylate | | 220.6 | 114.1 |
| | Deionized water | | 386.6 | 200 |
| Initiator Mixture | Sodium persulfate | 6 | 40.8 | 21.1 |
| | Deionized water | 26.5 | 222.3 | 115 |
| Sodium metabisulfite Mixture | Sodium metabisulfite | | 84.7 | 43.8 |
| | Deionized water | | 158.5 | 100.4 |
| Chain Agent Transfer Solution | Phenyl phosphonic acid | 6.6 | | |
| | Deionized water | 62.5 | | |
| | isopropanol | 62.5 | | |
| Diluent | Deionized water | 60 | 193.3 | 146.5 |
| Polymer Mn | | 3,000 | 3,480 | 3,570 |
| Polymer Mw | | 11,000 | 13,900 | 13,900 |
| Polymer % Solids | | 48.4% | 50.1% | 50.5% |

When composition of this invention employs a polycarboxylic acid copolymer, it also contains a polyol containing at least two hydroxyl groups of the type described above in connection with the homopolymer.

### Hydroxy Functional Carboxy Functional Polymers

One type of aqueous hydroxy functional carboxy functional polymers useful in formulations of this invention include the reaction products of alpha, beta-ethylenically unsaturated hydroxy monomer, ethylenically unsaturated carboxylic acid monomer, chain transfer agent, and, optionally free radical initiator, as taught, for example, in U.S. Patent Application Publication No. 2004/0033747. The aqueous hydroxy functional carboxy functional polymer can be in the form of a solution, dispersion, emulsion or suspension. The aqueous hydroxy functional carboxy functional polymer is aqueous-based and preferably prepared by free radical solution polymerization. Other suitable polymerization techniques include, e.g., emulsion polymerization and suspension polymerization techniques. For emulsion polymerization, anionic surfactants, nonionic surfactants and combinations thereof can be used. Preferably the aqueous hydroxy functional carboxy functional polymer is a random copolymer.

The aqueous hydroxy functional carboxy functional polymer preferably has an acid number of at least 300 mg KOH/g dried material (i.e., dried polymer and residual solids present in the aqueous solution polymer composition), in some embodiments at least 380 mg KOH/g dried material, in other embodiments at least 450 mg KOH/g dried material, in other embodiments at least 500 mg KOH/g dried material, in other embodiments no greater than 780 mg KOH/g dried material, in other embodiments no greater than 710 mg KOH/g dried material, in other embodiments no greater than 650 mg KOH/g dried material, in other embodiments no greater than 600 mg KOH/g dried material.

Useful alpha,.beta-ethylenically unsaturated hydroxy functional monomers include, e.g., .alpha.,.beta.-ethylenically unsaturated monohydroxy functional monomers including, e.g., hydroxy alkyl acrylate monomers including, e.g., hydroxy methyl acrylate, hydroxy ethyl acrylate, 2-hydroxy ethyl acrylate, hydroxy propyl acrylate, hydroxy butyl acrylate, and hydroxy alkyl methacrylates, .alpha,.beta-ethylenically unsaturated polyhydroxy monomers including, e.g., polyethylene glycol monomethacrylate, and combinations thereof.

The aqueous hydroxy functional carboxy functional polymer is preferably prepared from .alpha,.beta-ethylenically unsaturated hydroxy functional monomers in an amount of at least 5% by weight, in other embodiments 10% by weight, in other embodiments at least 20% by weight, in some embodiments at least 25% by weight, in other embodiments no greater than 75% by weight, in other embodiments no greater than 50% by weight, in other embodiments no greater than 45% by weight.

Suitable ethylenically unsaturated carboxylic acid monomers include, e.g., acrylic acid, glacial acrylic acid, methacrylic acid, isooctyl acrylic acid, crotonic acid, isocrotonic acid, fumaric acid, cinnamic acid, maleic acid, 2-methylmaleic acid, itaconic acid, 2-methylitaconic acid, .alpha.,.beta.-methyleneglutaric acid, methacrylic anhydride, isooctyl acrylic anhydride, crotonic anhydride, fumaric anhydride, and maleic anhydride.

The polymer preferably includes ethylenically unsaturated carboxylic acid monomers in an amount less than 100% by weight, in some embodiments no greater than 98% by weight, in other embodiments no greater than 90% by weight, in other embodiments no greater than 80% by weight, in other embodiments, no greater than 75% by weight, in other embodiments at least 30% by weight, in other embodiments at least 40% by weight, in other embodiments at least 50% by weight, in other embodiments at least 60% by weight, in other embodiments at least 65% by weight.

Suitable chain transfer agents include, e.g., sodium hypophosphite, thioglycolic acid, mercaptans including, e.g., primary octyl mercaptan, 2-mercaptoethanol, n-dodecylmercaptan, n-octylmercaptan, t-dodecyl mercaptan, mercaptoethanol, iso-octyl thioglycolurate, mercapto carboxylic acids having 2 to 8 carbon atoms, and their esters, examples of which include 3-mercapto propionic acid and 2-mercapto propionic acid, halogenated hydrocarbons including, e.g., carbonbromo compounds (e.g., carbon tetrabromide and bromotrichloromethane) and combinations thereof. The chain transfer agent can be present in the mixture used to form the hydroxy functional polycarboxylic acid polymer in an amount no greater than 5% by weight, preferably from 1% by weight to about 4% by weight, more preferably from 1% by weight to about 3% by weight based on the monomer weight.

Suitable free radical initiators include oxidizing agents including, e.g., water-soluble peroxy compounds such as hydrogen peroxide, t-butyl-hydroperoxide, di-t-butyl peroxide, cumene hydroperoxide, acetylacetone peroxide, t-butyl perneodecanoate, t-butyl perneohexanoate, t-butyl per-2-ethylhexanoate, t-butyl perbenzoate, t-butyl perpivalate, t-butyl pivalate, t-amyl perpivalate, di-t-butyl peroxide, dibenzoyl peroxide, dicyclohexyl peroxodicarbonate, dibenzoyl peroxodicarbonate, dilauroyl peroxide, methyl ethyl ketone peroxide; water-soluble inorganic persulphates including, e.g., ammonia persulfate, lithium persulfate, potassium persulfate and sodium persulfate; water-soluble azo compounds including, e.g., 4,4'-azobis(4-cyanovaleric acid) or its salts, azodiisobutyronitrile, 2,2'-azobis(2-amidinopropane) dihydrochloride, and 2-(carbamoylazo)isobutyonitrile, and combinations thereof.

The free radical initiator can be present in the reaction mixture in an amount no greater than 10% by weight based on the weight of the monomer(s) charged to the reaction vessel.

The free radical initiator can be part of an initiator system that includes oxidizing agent and reducing agent. Suitable reducing agents include, e.g., sodium formaldehyde-sulfoxylate, ferrous salts, sodium dithionite, sodium hydrogen sulfite, sodium sulfite, sodium thiosulfate, sodium bisulphate, ascorbic acid, erythorbic acid and the sodium salts of ascorbic acid and erythorbic acid, and combinations thereof.

The initiator system can also include a transition metal catalyst including, e.g., salts of iron, cobalt, nickel, copper, vanadium and manganese. Examples of suitable catalysts include iron (II) sulfate, cobalt (II) chloride, nickel (II) sulfate, copper (I) chloride, and combinations thereof.

The amount of the initiator system (i.e. including the oxidizing agent and, where present, reducing agent and catalyst) is from 0.01% by weight to 20% by weight based on the weight of the monomer(s) charged to the reaction vessel.

The reaction mixture from which the hydroxy functional carboxy functional polymer is prepared is preferably free of .alpha,.beta-ethylenically unsaturated non-hydroxy functional, non-carboxy functional monomer, i.e., .alpha,.beta-ethylenically unsaturated monomer that does not include at least one of a hydroxy functional group and a carboxy functional group. When present, the .alpha,.beta-ethylenically unsaturated nonhydroxy functional, noncarboxy functional monomer is preferably present in an amount of less than 50% by weight based on the weight of the hydroxy functional carboxy functional polymer.

The condensation accelerator of the aqueous composition speeds the condensation reaction that occurs as the polymer cures. Suitable condensation accelerators include, e.g., phosphorous-based catalysts including, e.g., sodium hypophosphite and phosphoric acid, para toluene sulfonic acid, any strong acids including, e.g., hydrochloric acid, sulfuric acid, trichloroacetic acid, and e.g., acidic metal salts including, e.g., aluminum chloride, iron chloride, zirconium oxychloride, chromic nitrate, chromic perchlorate, aluminum nitrate, iron nitrate, zinc nitrate and combinations thereof.

The condensation accelerator can be present in the aqueous composition in an amount no greater than 15% by weight, preferably from 3% by weight to about 6% by weight based on the weight of the aqueous hydroxy functional carboxy functional solution polymer.

The aqueous composition can also include other components including, e.g., emulsifiers, surfactants, pigments, fillers, biocides, anti-mycotics including, e.g., fungicides and mold inhibitors, plasticizers, anti-foaming agents, colorants, waxes, antioxidants, adhesion promoting agents including, e.g., silanes and boranes, odor masking agents, and combinations thereof.

The aqueous composition is essentially free of (i.e., has less than 10,000 parts per million (ppm)) and preferably free of formaldehyde and phenol-formaldehyde.

The aqueous composition preferably is essentially free of (i.e., has less than 10,000 ppm) polyol having an acid number less than 100 mg KOH/g dried material, examples of which include ethylene glycol, glycerol, pentaerythritol, trimethylol propane, sorbitol, sucrose, glucose, resorcinol, catechol, pyrogallol, glycollated ureas, 1,4-cyclohexane diol, dethanolamine, triethaniolamine, .alpha,.beta-ethylenically unsaturated hydroxy functional monomer, and combinations thereof.

### Example 5

An aqueous solution polymer of 70/30 glacial acrylic acid/2-hydroxyethyl acrylate (HEA/AA) is prepared by charging 481.4 g water, 5.6 g 50% hydrogen peroxide, and 0.097 g DISSOLVINE 4.5% H-Fe (Akzo Nobel Chem. Inc., Lima, Ohio) to a reaction vessel. A monomer feed of 363.6 g glacial acrylic acid, 155.8 g 2-hydroxyethyl acrylate, and 2.11 g 2-mercaptoethanol is then fed into the reaction vessel. Additional mixtures of 58.7 g water and 5.36 g 50% hydrogen peroxide, and a mixture of 60 g water and 4.07 g erythorbic acid are then fed into the reaction vessel. A first mixture of 5.8 g water, 0.70 g tertbutylhydrogen peroxide, 5.8 g water, and 0.48 g erythorbic acid is then added to the reaction vessel, which is maintained at 70.degree. C. A second mixture of 5.8 g water, 0.70 g tertbutylhydrogen peroxide, 5.8 g water, and 0.48 g erythorbic acid is then added to the reaction vessel, which is maintained at 72.degree. C.

### Examples 6-10

Examples 6-10 are prepared according to the procedure described in Example 5 with the exception that the amount (i.e., % by weight) acrylic acid monomer and hydroxy ethyl acrylate monomer (AA/HEA) added to the reaction vessel is as follows: 90/10 AA/HEA (Example 6), 80/20 AA/HEA (Example 7), 70/30 AA/HEA (Example 8), 60/40 AA/HEA (Example 9), and 50/50 AA/HEA (Example 10).

### Example 11

An aqueous solution polymer of 70/30 glacial acrylic acid/2-hydroxyethyl acrylate (AA/2-HEA) is prepared by charging 600 g water, 5.6 g 50% hydrogen peroxide, 0.1 g DISSOLVINE 4.5% H-Fe (Akzo Nobel Chem. Inc.), and 0.055 g (based on 0.01% solids) SILQUEST A-171 silane (Crompton Corp., Greenwich, Conn.) to a reaction vessel. Mixtures of 59 g water and 5.5 g 50% hydrogen peroxide, and a mixture of 60 g water and 4 g erythorbic acid are then fed into the reaction vessel. A monomer feed of 364 g glacial acrylic acid, 156 g 2-hydroxyethyl acrylate, and 9.5 g 2-mercaptoethanol is then fed into the reaction vessel. A first mixture of 5.8 g water, 0.7 g 70% tcrtbutylhydrogen peroxide, 5.8 g water, and 0.48 g erythorbic acid is then added to the reaction vessel, which is maintained at 70.degree. C. A second mixture of 5.8 g water, 0.7 g 70% tertbutylhydrogen peroxide, 5.8 g water, and 0.48 g erythorbic acid is then added to the reaction vessel, which is maintained at 70.degree. C. A third mixture of 5.8 g water, 0.7 g 70% tertbutylhydrogen peroxide, 5.8 g water, and 0.48 g erythorbic acid is then added to the reaction vessel, which is maintained at 70.degree. C.

The aqueous solution polymer is cooled to less than 30.degree. C. and 50% sodium hydroxide is added to the composition to achieve a pH of 2.35. The composition reportedly has a solids content of 41%, and a viscosity of 195 cps. The resulting polymer reportedly has a number average molecular weight of 3910 and an acid number of 546 mg KOH/g dried material.

### Example 12

An aqueous polymer solution of 70/30 (glacial acrylic acid/2-hydroxyethyl acrylate) is prepared by charging 713.9 g water, 6 g 50% hydrogen peroxide, 0.1 g DISSOLVINE 4.5% iron solution and 10.8 g sodium hypophosphite monohydrate to a reaction vessel and heated to 70.degree. C. A monomer blend consisting of 404.4 g glacial acrylic acid and 173.31 g 2-hydroxyethyl acrylate (2-HEA) and is uniformly added to the reactor over a three hour period with mechanical agitation. At the same time, additional mixtures of 63.8 g water and 5.8 g 50% hydrogen peroxide and a mixture of 66 g water and 4.3 g erythorbic acid are uniformly fed into the reactor over a 3.5 hour period. After completion of the feeds, the reactor content is heated an additional 30 minutes at 70.degree. C. The reactor is then charged with a mixture of 12.6 g water and 1.5 g tetrabutylhydrogen peroxide 70% and a mixture of 12.6 g water and 1.04 g erythorbic acid and stirred an additional 15 minutes at 70.degree. C.

The resulting aqueous solution polymer is cooled to room temperature. A mixture of 15 g water and 12.3 g sodium hypophosphite monohydrate is then charged to the reactor.

The polymer reportedly has a number average molecular weight (Mn) of 7,360 g/mole.

One part-per-hundred ammonium chloride based on the total weight of the aqueous solution polymer composition is then charged to the aqueous solution polymer composition. The aqueous solution polymer composition is cured by drying in a forced air oven at 180.degree. C. for 5 minutes. The resulting cured composition reportedly exhibits a dry tensile strength of 11.8 1b/ft and a wet tensile strength of 4.1 1b/ft.

### Example 13

An aqueous polymer solution of 70/30 (2-hydroxylethylacrylate/glacial acrylic acid) is prepared by charging 535 g water, 4.5 g 50% hydrogen peroxide, 0.1 g DISSOLVINE 4.5% iron solution, and 8.1 g sodium hypophosphite monohydrate to a reaction vessel and heated to 70.degree. C. A blend consisting of 130 g glacial acrylic acid and 303 g 2-hydroxylethylacrylate (2-HEA) is uniformly added to the reactor over a three hour period using mechanical agitation. At the same time, additional mixtures of 48 g water and 4.4 g 50% hydrogen peroxide and a mixture of 48 g water and 3.25 g erythorbic acid are uniformly fed into the reactor over a 3.5-hour period. After completion of the feeds, the reactor content is heated an additional 30 minutes at 70.degree. C. The reactor is then charged with a mixture of 4.7 g water and 0.6 g tetrabutylhydrogen peroxide and a mixture of 4.7 g water and 0.4 g erythorbic acid and stirred an additional 15 minutes at 70.degree. C. The resulting solution polymer is charged with a mixture of 16 g sodium hypophosphite and 16 water.

The resulting aqueous solution polymer reportedly has a pH of 2.4, a viscosity of 320 cps at 25.degree. C., and a solid content of 41%.

### Example 14

An aqueous polymer solution of 70/30 (glacial acrylic acid/2-hydroxylethylacrylate) is prepared by charging 600 g water, 5.6 g 50% hydrogen peroxide, 0.1 g DISSOLVINE 4.5% iron solution, and 16 g sodium hypophosphite monohydrate to a reaction vessel and heated to 70.degree. C. A blend of 364 g glacial acrylic acid and 156 g 2-hydroxylethylacrylate (2-HEA) is uniformly added to the reactor over a three hour period using mechanical agitation. At the same time, additional mixtures of 60 g water and 5.4 g 50% hydrogen peroxide, and a mixture of 60 g water and 4 g erythorbic acid are uniformly fed into the reactor over a 3.5 hour period. After completion of the feeds, the reactor content is heated an additional 30 minutes at 70.degree. C. The reactor is then charged with a mixture of 12 g water and 1.5 g tetrabutylhydrogen peroxide, and a mixture of 12 g water and 1 g erythorbic acid and stirred an additional 15 minutes at 70.degree. C.

The resulting aqueous solution polymer reportedly has a pH of 2.5, a viscosity of 200 cps at 25.degree. C. a solid content of 42%, a number average molecular weight of 2,300 g/mol, a dry tensile strength of 6.1.+-.0.4 1b/f, and a wet tensile strength of 7.7.+-.0.7 1b/f.

A second type of hydroxy functional, carboxy functional polymer useful in the compositions of this invention is disclosed in U.S. Patent Application No. 10/901,793 published February 17, 2005 that is incorporated herein by reference. Such polymers comprise, as copolymerized units, a monomer comprising carboxylic acid groups, anhydride groups, or salts thereof, and a hydroxyl group-comprising monomer of Formula I, a polymer comprising, as copolymerized units, a monomer comprising carboxylic acid groups, anhydride groups, or salts thereof, and a hydroxyl group-comprising monomer of Formula I,

CH2=C(R1)CH(R2)OR3 (I)

wherein R1 and R2 are independently selected from hydrogen, methyl, and -CH2OH; and R3 is selected from hydrogen, -CH2CH(CH3)OH, -CH2CH2OH and (C3-C12) polyol residues; or of Formula II, 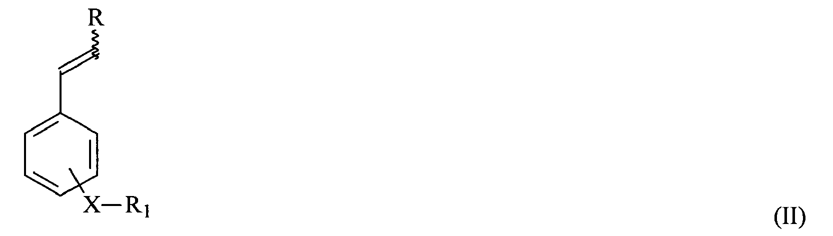 wherein R is selected from CH₃, Cl, Br, and C6H5; and R1 is selected from H, OH, CH2OH, CH(CH3)OH, glycidyl, CH(OH)CH2OH, and (C3-C12)polyol residues;
wherein the ratio of the number of equivalents of said carboxylic acid groups, anhydride groups, or salts thereof to the number of equivalents of said hydroxyl groups is from about 1/0.01 to about 1/3.

This second type of hydroxy functional, hydroxy functional polymer includes, as copolymerized units, a monomer including carboxylic acid groups, anhydride groups, or salts. The polymer is preferably an addition polymer. A carboxylic acid monomer such as, for example, methacrylic acid, acrylic acid, crotonic acid, fumaric acid, maleic acid, 2-methyl maleic acid, itaconic acid, citraconic acid, mesaconic acid, cyclohexenedicarboxylic acid, 2-methyl itaconic acid, *α*,-methylene glutaric acid, monoalkyl maleates, and monoalkyl fumarates, and salts thereof; and ethylenically unsaturated anhydrides such as, for example, maleic anhydride, itaconic anhydride, acrylic anhydride, and methacrylic anhydride; preferably at a level of from 1% to 99%, more preferably at a level of from 10% to 90% by weight, based on the weight of the polymer, can be used. Preferred monomers including carboxylic acid groups, anhydride groups, or salts are acrylic acid and maleic acid, and salts thereof, and maleic anhydride.

In the practice of this invention using this second type of hydroxy functional, carboxy functional polymer, we prefer not to neutralize as taught in U.S. Patent Application No. 10/901,793, obviously.
Examples of this second type of hydroxy-functional, hydroxy functional polymer include the following Examples 15-16.

**Table 2**

| **List of Abbreviations** | |
|---|---|
| Common Name | *Abbreviation* |
| Hydroxyethyl acrylate | HEA |
| Sodium metabisulfite | SMBS |
| Maleic Anhydride | MAn |
| Maleic Acid | MAc |
| Sodium Hydroxide | NaOH |
| 3-Allyloxy-1,2-propanediol | Allyl-OOP |
| Gel Permeation Chromatography | GPC |
| High performance liquid chromatography | HPLC |
| Acrylic acid | AA |
| Number average molecular weight | Mn |
| Weight average molecular weight | Mw |
| Sodium persulfate | NaPS |
| 45% Sodium hypophosphite in water | SHP |
| Deionized water | H₂O |

### EXAMPLES 16-17

### . Preparation of curable compositions

Poly(AA/Allyl-OOP) copolymers are prepared in a 1-liter round bottom flask with four neck equipped with a mechanical stirrer, condenser, temperature control device, initiator feed lines and a nitrogen inlet. The specific amounts of kettle ingredients are in Table 3, lines A to C. The kettle mixture is heated to 90°C while stirring under a nitrogen purge. Upon reaching 90°C temperature, ingredients (D), (E), and (F) are introduced into the reaction flask with stirring. Ingredients (G), mixture (H) and (I), and initiator mixture (J and K) are all co-fed separately over a 120-minute period. The reaction is allowed to run at 93°C. Upon completion of the feeds, the reaction mixture is maintained at the reaction temperature for 15 minutes. The resulting copolymer was characterized for conversion by HPLC, and molecular weight by aqueous GPC. Characterization data are in Table 4.

**Table 3**

| **Polymerization Ingredients for Examples 16-17** | | | |
|---|---|---|---|
| | Ingredients | Example 16 | Example 17 |
| A | H₂O¹ | 280g | 280g |
| B | SHP² | 7.3g | 9.5g |
| C | Allyl-OOP | 133.3g | 133.3g |
| D | AA | 18g | 18g |
| E | NaPS³ | 1g | 1g |
| F | H₂O¹ | 5g | 5g |
| G | AA | 182g | 182g |
| H | SHP^{2,4} | 22.2g | 29g |
| I | H₂O¹ | 13.8g | 13.8g |
| J | NaPS⁵ | 9g | 9g |
| K | H₂O¹ | 27g | 33.8g |

| | | | |
|---|---|---|---|
| (1) Deionized water | | | |
| (2) SHP is at 45% solids in water. | | | |
| (3) Dissolved with F. | | | |
| (4) SHP diluted with I. | | | |
| (5) Dissolved with K. | | | |

**Table 4**

| **Polymer Characterization for Examples 16-17** | | |
|---|---|---|
| | Example 16 | Example 17 |
| Aqueous GPC | | |
| Mn | 2165 | 1650 |
| Mw | 7851 | 5203 |
| % Solids | 50% | 49.6% |
| Conversion | 98% | 98% |

When a hydroxy-functional carboxy functional polymer is used in compositions of this invention, it is preferred, but optional that a polyol be added in addition to the polybasic acid and strong acid. The polyol can be of the types described above in connection with the homopolymer.

### Amine Functional Carboxy Functional Polymers

Aqueous amine functional carboxy functional polymers useful in formulations of this invention include the reaction products of .alpha., .beta.-ethylenically unsaturated amine monomer, ethylenically unsaturated carboxylic acid monomer, chain transfer agent, and, optionally free radical initiator, as taught, for example, in U.S. Patent Application Publication No. 2004/0082241. The aqueous amine functional carboxy-functional polymer can be in the form of a solution, dispersion, emulsion or suspension. The aqueous amine functional carboxy functional polymer is aqueous-based and preferably prepared by free radical solution polymerization. Other suitable polymerization techniques include, e.g., emulsion polymerization and suspension polymerization techniques. For emulsion polymerization, anionic surfactants, nonionic surfactants and combinations thereof can be used. Preferably the aqueous amine functional carboxy functional polymer is a random copolymer.

Examples of amine functional monomers useful in the present invention include, N, N dialkylaminoalkyl(meth) acrylate, N,N dialkylaminoalkyl (meth) acrylamide, preferably dimethylaminopropyl methacrylate, dimethylaminoethyl methacrylate, tert-butylaminoethyl methacrylate and dimethylaminopropyl methacrylamide. In addition monomers like vinyl formamide and vinylacetamide that can be hydrolyzed to vinyl amine after polymerization may also be used. In addition monomers like vinyl formamide and vinylacetamide that can be hydrolyzed to vinyl amine after polymerization may also be used. Cationic monomers includes the quarternized derivatives of the above monomers as well as diallyldimethylammonium chloride, methacrylamidopropyl trimethylammonium chloride Furthermore, aromatic amine monomers such as vinyl pyridine may also be used. Other amine- containing monomers could also be polymerized into the polymer to provide the amine functionality. These include, but are not limited to sulfobetaines and carboxybetaines.

When an amine-functional carboxy functional polymer is used in compositions of this invention, it is preferred that a polyol be added in addition to the polybasic acid and strong acid. The polyol can be of the types described above in connection with the homopolymer.

### Example 18

### A Sulfobetaine

A reactor containing 200 grams of water and 244 grams of isopropanol is heated to 85° C. A monomer solution containing 295 grams of acrylic acid and 5 grams of 4-vinylpyridine is added to the reactor over a period of 3.0 hours. An initiator solution comprising of 15 grams of sodium persulfate in 100 grams of deionized water is simultaneously added to the reactor over a period of 3.5 hours. The reaction product is held at 85° C. for an additional hour. The isopropanol is then distilled using a dean Stark trap. The vinylpyridine moiety is then functionalized to the sulfobetaine by reaction with sodium chlorohydroxypropane sulfonate at 100°C for 6 hours.

### Example 19

### A Polymer with a Ouaternized Amine Comonomer

A reactor containing 200 grams of water and 244 grams of isopropanol is heated to 85° C. A monomer solution containing 290 grams of acrylic acid and 10 grams of diallyldimethylammonium chloride is added to the reactor over a period of 3.0 hours. An initiator solution comprising 15 grams of sodium persulfate in 100 grams of deionized water is simultaneously added to the reactor over a period of 3.5 hours. The reaction product is held at 85° C. for an additional hour. The isopropanol is then distilled using a dean Stark trap.

### Formulations

Table 5 below sets forth one formulation of this invention (Sample B) and two comparative formulations A and C that are used in the experiments reported below. Each formulation is diluted with de-ionized water to make up to 50% solids by weight.

**Table 5**

| Formulation | Polyacrylic Acid (from Example 1) | Citric Acid | Triethanolamine ("TEA") | Sulfuric Acid | De-ionized Water |
|---|---|---|---|---|---|
| A | 98.0 | 0.0 | 19.2 | 4.1 | 24.5 |
| B | 68.6 | 30.0 | 16.6 | 1.6 | 18.9 |
| C | 68.6 | 30.0 | 16.6 | 0.0 | 17.4 |

| | | | | | |
|---|---|---|---|---|---|
| All units are in grams | | | | | |

### DMA Sample Preparation and Test Method

Dynamic mechanical analysis ("DMA") is tested for Formulations A, B, and C using TA instruments Model #2980 with dual cantilever clamp. For each formulation, test strips are prepared by adding 0.15 grams of formulation diluted with de-ionized water to 30% weight solids, to each of two strips of Whatman® GF/B filter paper (0.5" w x 1.34" 1), and placing one strip on top of the other, and placing the resulting sandwich in the clamping device on the instrument. The DMA experiments are conducted at a constant deformation frequency of 1 Hz. applied over a temperature range of 30°C to 250°C ramped at a rate of 4° C/min.

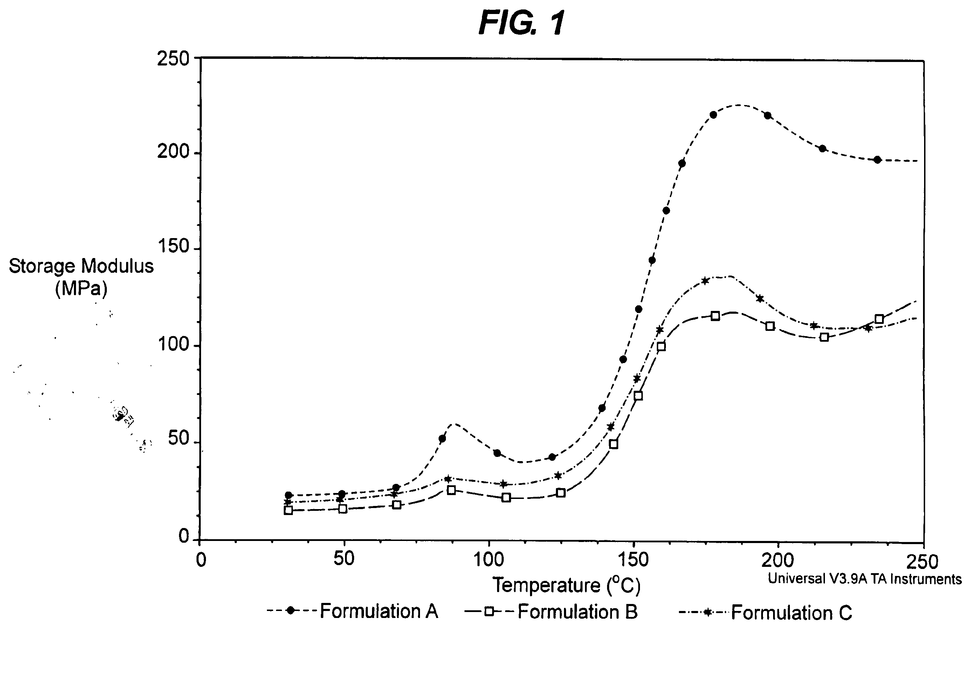

In Figure 1, the DMA curves show the increase in storage modulus, or stiffness, of each formulation with increasing temperature. The first peak represents the increase in solids as the water phase evaporates, followed by a decrease in modulus through the polymer's glass transition temperature range. The second peak occurs at the final cure temperature of each formulation system. The difference in storage modulus between the peak minimum, or the temperature at the onset of cure, and the final cure temperature represents the overall energy required for full curing of the formulation

As one can see from Figure 1, the overall cure energy (i.e., the differences in areas under the three curves is lowest for formulation B of this invention compared to either of the two controls

### Viscosity

Viscosity was measured using a low sheer Brookfield LVDT rheometer. Formulation samples were prepared at 50% weight solids and allowed to equilibrate to room temperature prior to testing (22°C ± 1°C). Each sample was measured using spindle #2 at 60 rpm. Viscosity in centipoise was recorded once the reading stabilized.

| Formulation | Viscosity (centipoise) |
|---|---|
| A | 106 |
| B | 40 |
| C | 46 |

As can be seen from these data, the viscosity of formulation B is unexpectedly lower than either of the two control formulations, the advantages of which were described previously.

## Claims

1. A composition, comprising:
(A) a polymeric composition selected from the group consisting of
(1) a polycarboxy polymer having a number average molecular weight of between about 1000 and about 5,000 and a polyol,
(2) a hydroxy-functional, carboxy-functional polymer having a number average molecular weight of between about 1000 and about 5,000, comprising the reaction product of
(a) at least 5% by weight α,β-ethylenically unsaturated hydroxy functional monomer,
(b) at least 30% by weight ethylenically unsaturated carboxylic acid monomer, and
(c) 0% by weight to less than 50% by weight α,β-ethylenically unsaturated non-hydroxy functional, non-carboxy functional monomer, or
(3) an amine-functional, carboxy-functional polymer having a number average molecular weight of between about 1000 and about 5,000 comprising the reaction product of
(a) at least 5% by weight α,β-ethylenically unsaturated amine-functional monomer,
(b) at least 30% by weight ethylenically unsaturated carboxylic acid monomer, and
(c) 0% by weight to less than 50% by weight α,β-ethylenically unsaturated non-amine functional, non-carboxy functional monomer
(B) a polybasic carboxylic acid, or an anhydride or salt thereof, with a molecular weight of less than about 500, where the weight % of the polybasic carboxylic acid, or an anhydride or salt thereof is 3 to 40% of the weight of polymeric composition (A);
(C) a strong acid; and
(D) water in an amount at least 20% by weight of the total composition,
wherein the pH of the composition is no greater than 3.5.

2. The composition of claim 1, wherein the pH of the composition is no greater than 2.5.

3. The composition of claim 1, wherein the composition further comprises a catalyst which comprises an alkali metal salt of a phosphorus-containing acid.

4. The composition of claim 1, wherein the strong acid comprises an inorganic acid.

5. The composition of claim 1, wherein the inorganic acid is sulfuric acid.

6. The composition of claim 1 wherein the polybasic carboxylic acid, or an anhydride or salt thereof, with a molecular weight of less than about 200.

7. The composition of claim 1 wherein the polymeric composition (A) is a hydroxy-functional, carboxy-functional polymer and wherein the compostion further includes a polyol.

8. The composition of claim 1 wherein the polymeric composition (A) is an amine-functional, carboxy-functional polymer and wherein the composition further includes a polyol.

9. A substrate coated with a composition, wherein the composition comprises:
(A) a polymeric composition selected from the group consisting of
(1) a polycarboxy polymer having a number average molecular weight of between about 1000 and about 5,000 and a polyol,
(2) a hydroxy-functional, carboxy-functional polymer having a number average molecular weight of between about 1000 and about 5,000, comprising the reaction product of
(a) at least 5% by weight α,β-ethylenically unsaturated hydroxy functional monomer,
(b) at least 30% by weight ethylenically unsaturated carboxylic acid monomer, and
(c) 0% by weight to less than 50% by weight α,β-ethylenically unsaturated non-hydroxy functional, non-carboxy functional monomer, or
(3) an amine-functional, carboxy-functional polymer having a number average molecular weight of between about 1000 and about 5,000 comprising the reaction product of
(a) at least 5% by weight α,β-ethylenically unsaturated amine-functional monomer,
(b) at least 30% by weight ethylenically unsaturated carboxylic acid monomer, and
(c) 0% by weight to less than 50% by weight α,β-ethylenically unsaturated non-amine functional, non-carboxy functional monomer
(B) a polybasic carboxylic acid, or an anhydride or salt thereof, with a molecular weight of less than about 500, where the weight % of the polybasic carboxylic acid, or an anhydride or salt thereof is 3 to 40% of the weight of polymeric composition (A);
(C) a strong acid; and
(D) water in an amount at least 20% by weight of the total composition,
wherein the pH of the composition is no greater than 3.5.

10. The coated substrate of claim 9 wherein the substrate is a fiberglass wherein the composition is then thermally cured such that the composition becomes cross-linked and the water is driven off.

## Patentansprüche

1. Zusammensetzung, umfassend:
(A) eine polymere Zusammensetzung, ausgewählt aus der Gruppe, bestehend aus
(1) einem Polycarboxypolymer mit einem Zahlenmittel des Molekulargewichts von zwischen etwa 1000 und etwa 5000 und einem Polyol,
(2) einem Hydroxy-funktionellen, Carboxy-funktionellen Polymer mit einem Zahlenmittel des Molekulargewichts von zwischen etwa 1000 und etwa 5000, umfassend das Reaktionsprodukt von
(a) mindestens 5 Gewichtsprozent α,β-ethylenisch ungesättigtem, Hydroxy-funktionellem Monomer,
(b) mindestens 30 Gewichtsprozent ethylenisch ungesättigtem Carbonsäuremonomer, und
(c) 0 Gewichtsprozent bis weniger als 50 Gewichtsprozent α,β-ethylenisch ungesättigtem, nicht-Hydroxy-funktionellem, nicht-Carboxy-funktionellem Monomer, oder
(3) einem Amino-funktionellen, Carboxy-funktionellen Polymer mit einem Zahlenmittel des Molekulargewichts von zwischen etwa 1000 und etwa 5000, umfassend das Reaktionsprodukt von
(a) mindestens 5 Gewichtsprozent α,β-ethylenisch ungesättigtem, Amino-funktionellem Monomer,
(b) mindestens 30 Gewichtsprozent ethylenisch ungesättigtem Carbonsäuremonomer, und
(c) 0 Gewichtsprozent bis weniger als 50 Gewichtsprozent α,β-ethylenisch ungesättigtem, nicht-Amino-funktionellem, nicht-Carboxy-funktionellem Monomer
(B) eine mehrbasige Carbonsäure, oder ein Anhydrid oder Salz davon, mit einem Molekulargewicht von weniger als etwa 500, wobei das prozentuale Gewicht der mehrbasigen Carbonsäure, oder eines Anhydrids oder Salzes davon, 3 bis 40% des Gewichts der polymeren Zusammensetzung (A) beträgt,
(C) eine starke Säure, und
(D) Wasser in einer Menge von mindestens 20 Gewichtsprozent der Gesamtzusammensetzung, wobei der pH der Zusammensetzung nicht größer als 3.5 ist.

2. Zusammensetzung nach Anspruch 1, wobei der pH der Zusammensetzung nicht größer als 2.5 ist,

3. Zusammensetzung nach Anspruch 1, wobei die Zusammensetzung weiter einen Katalysator umfasst, welcher ein Alkalimetallsalz einer Phosphorenthaltenden Säure umfasst.

4. Zusammensetzung nach Anspruch 1, wobei die starke Säure eine anorganische Säure umfasst.

5. Zusammensetzung nach Anspruch 1, wobei die anorganische Säure Schwefelsäure ist.

6. Zusammensetzung nach Anspruch 1, wobei die mehrbasige Carbonsäure, oder ein Anhydrid oder Salz davon, ein Molekulargewicht von weniger als etwa 200 aufweist.

7. Zusammensetzung nach Anspruch 1, wobei die polymere Zusammensetzung (A) ein Hydroxy-funküonelles, Carboxy-funktionelles Polymer ist, und wobei die Zusammensetzung weiter ein Polyol einschließt.

8. Zusammensetzung nach Anspruch 1, wobei die polymere Zusammensetzung (A) ein Amino-funktionelles, Carboxy-funktionelles Polymer ist, und wobei die Zusammensetzung weiter ein Polyol einschließt.

9. Mit einer Zusammensetzung beschichtetes Substrat, wobei die Zusammensetzung umfasst:
(A) eine polymere Zusammensetzung, ausgewählt aus der Gruppe, bestehend aus
(1) einem Polycarboxypolymer mit einem Zahlenmittel des Molekulargewichts von zwischen etwa 1000 und etwa 5000 und einem Polyol,
(2) einem Hydroxy-funktionellen, Carboxy-funktionellen Polymer mit einem Zahlenmittel des Molekulargewichts von zwischen etwa 1000 und etwa 5000, umfassend das Reaktionsprodukt von
(a) mindestens 5 Gewichtsprozent α,β-ethylenisch ungesättigtem, Hydroxy-funktionellem Monomer,
(b) mindestens 30 Gewichtsprozent ethylenisch ungesättigtem Carbonsäuremonomer, und
(c) 0 Gewichtsprozent bis weniger als 50 Gewichtsprozent α,β-ethylenisch ungesättigtem, nicht-Hydroxy-funktionellem, nicht-Carboxy-funktionellem Monomer, oder
(3) einem Amino-funktionellen, Carboxy-funktionellen Polymer mit einem Zahlenmittel des Molekulargewichts von zwischen etwa 1000 und etwa 5000, umfassend das Reaktionsprodukt von
(a) mindestens 5 Gewichtsprozent α,β-ethylenisch ungesättigtem, Amino-funktionellem Monomer,
(b) mindestens 30 Gewichtsprozent ethylenisch ungesättigtem Carbonsäuremonomer, und
(c) 0 Gewichtsprozent bis weniger als 50 Gewichtsprozent α,β-ethylenisch ungesättigtem, nicht-Amino-funktionellem, nicht-Carboxy-funktionellem Monomer
(B) eine mehrbasige Carbonsäure, oder ein Anhydrid oder Salz davon, mit einem Molekulargewicht von weniger als etwa 500, wobei das prozentuale Gewicht der mehrbasigen Carbonsäure, oder eines Anhydrids oder Salzes davon, 3 bis 40% des Gewichts der polymeren Zusammensetzung (A) beträgt,
(C) eine starke Säure, und
(D) Wasser in einer Menge von mindestens 20 Gewichtsprozent der Gesamtzusammensetzung, wobei der pH der Zusammensetzung nicht größer als 3.5 ist.

10. Beschichtetes Substrat nach Anspruch 9, wobei das Substrat eine Glasfaser ist, wobei die Zusammensetzung dann thermisch so gehärtet ist, dass die Zusammensetzung vernetzt und das Wasser herausgetrieben ist.

## Revendications

1. Composition comprenant :
(A) une composition polymère choisie dans le groupe constitué par
(1) un polymère polycarboxylé ayant une masse moléculaire moyenne en nombre entre environ 1000 et environ 5000 et un polyol,
(2) un polymère à fonction hydroxy, à fonction carboxy, ayant une masse moléculaire moyenne en nombre entre environ 1000 et environ 5000, comprenant le produit de réaction de
(a) au moins 5 % en masse d'un monomère à fonction hydroxy et à insaturation α,β-éthylénique,
(b) au moins 30 % en masse d'un monomère acide carboxylique à insaturation éthylénique, et
(c) 0 % en masse à moins de 50 % en masse d'un monomère sans fonction hydroxy, sans fonction carboxy, à insaturation α,β-éthylénique, ou
(3) un polymère à fonction amine, à fonction carboxy, ayant une masse moléculaire moyenne en nombre entre environ 1000 et environ 5000, comprenant le produit de réaction de
(a) au moins 5 % en masse d'un monomère à fonction amine et à insaturation α,β-éthylénique,
(b) au moins 30 % en masse d'un monomère acide carboxylique à insaturation éthylénique, et
(c) 0 % en masse à moins de 50 % en masse d'un monomère sans fonction amine, sans fonction carboxy, à insaturation α,β-éthylénique,
(B) un acide carboxylique à plusieurs fonctions acides ou un anhydride ou un sel de celui-ci, avec une masse moléculaire inférieure à environ 500, le % en masse de l'acide carboxylique à plusieurs fonctions acides ou de l'anhydride ou du sel de celui-ci étant de 3 à 40 % en masse par rapport à la composition polymère (A) ;
(C) un acide fort ; et
(D) de l'eau en une quantité d'au moins 20 % en masse par rapport à la composition totale,
où le pH de la composition ne dépasse pas 3,5.

2. Composition selon la revendication 1, le pH de la composition ne dépassant pas 2,5.

3. Composition selon la revendication 1, la composition comprenant en outre un catalyseur qui comprend un sel de métal alcalin d'un acide contenant du phosphore.

4. Composition selon la revendication 1, dans laquelle l'acide fort comprend un acide minéral.

5. Composition selon la revendication 1, dans laquelle l'acide minéral est l'acide sulfurique.

6. Composition selon la revendication 1, dans laquelle l'acide carboxylique à plusieurs fonctions acides ou l'anhydride ou le sel de celui-ci, a une masse moléculaire inférieure à environ 200.

7. Composition selon la revendication 1, dans laquelle la composition polymère (A) est un polymère à fonction hydroxy, à fonction carboxy, la composition incluant en outre un polyol.

8. Composition selon la revendication 1, dans laquelle la composition polymère (A) est un polymère à fonction amine, à fonction carboxy, la composition incluant en outre un polyol.

9. Substrat revêtu d'une composition, la composition comprenant :
(A) une composition polymère choisie dans le groupe constitué par
(1) un polymère polycarboxylé ayant une masse moléculaire moyenne en nombre entre environ 1000 et environ 5000 et un polyol,
(2) un polymère à fonction hydroxy, à fonction carboxy, ayant une masse moléculaire moyenne en nombre entre environ 1000 et environ 5000, comprenant le produit de réaction de
(a) au moins 5 % en masse d'un monomère à fonction hydroxy et à insaturation α,β-éthylénique,
(b) au moins 30 % en masse d'un monomère acide carboxylique à insaturation éthylénique, et
(c) 0 % en masse à moins de 50 % en masse d'un monomère sans fonction hydroxy, sans fonction carboxy, à insaturation α,β-éthylénique, ou
(3) un polymère à fonction amine, à fonction carboxy, ayant une masse moléculaire moyenne en nombre entre environ 1000 et environ 5000, comprenant le produit de réaction de
(a) au moins 5 % en masse d'un monomère à fonction amine et à insaturation α,β-éthylénique,
(b) au moins 30 % en masse d'un monomère acide carboxylique à insaturation éthylénique, et
(c) 0 % en masse à moins de 50 % en masse d'un monomère sans fonction amine, sans fonction carboxy, à insaturation α,β-éthylénique,
(B) un acide carboxylique à plusieurs fonctions acides ou un anhydride ou un sel de celui-ci, avec une masse moléculaire inférieure à environ 500, le % en masse de l'acide carboxylique à plusieurs fonctions acides ou de l'anhydride ou du sel de celui-ci étant de 3 à 40 % en masse par rapport à la composition polymère (A) ;
(C) un acide fort ; et
(D) de l'eau en une quantité d'au moins 20 % en masse par rapport à la composition totale,
où le pH de la composition ne dépasse pas 3,5.

10. Substrat revêtu selon la revendication 9, où le substrat est une fibre de verre, et où la composition est ensuite durcie thermiquement de telle façon que la composition se réticule et que l'eau soit éliminée.
